# EUROPEAN PATENT SPECIFICATION

(11) **EP 0 800 258 B1**
(45) Date of publication and mention of the grant of the patent: **13.10.2004**
(21) Application number: 96305597.5
(22) Date of filing: 30.07.1996
(51) Int. Cl.: H02K 37/20, H02K 37/00

(54) **Hybrid-type stepping motor**
Schrittmotor des hybriden Typs
Moteur pas à pas type hybride

(30) Priority: 05.04.1996 JP 8408496; 22.04.1996 JP 10030396
(43) Date of publication of application: 08.10.1997
(73) Proprietor: TAMAGAWA SEIKI KABUSHIKI KAISHA, Iida-shi, Nagano-ken (JP)
(72) Inventor: Sugiura, Tsuneo, c/o Tamagawa Seiki K.K., Iida-shi, Nagano-ken (JP)
(74) Representative: Suckling, Andrew Michael

(56) References cited:
- GB-A- 2 052 176
- US-A- 4 127 802
- US-A- 4 672 247
- PATENT ABSTRACTS OF JAPAN vol. 9, no. 208 (E-338), 24 August 1985 & JP 60 070958 A (FUJITSU), 22 April 1985

## Description

The present invention relates to a hybrid-type stepping motor, and more specifically, to new improvements of the hybrid-type stepping motor which facilitate the winding and placement of coils, permit a high density of coils to achieve a high efficiency and low cost construction, and permit driving at any arbitrary number of phases, such as two-phase, three-phase and five-phase driving.

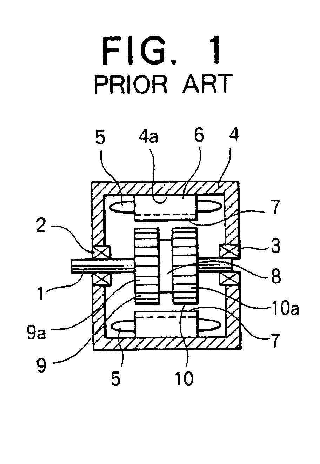

As shown in FIG. 1, the prior art hybrid-motor has a rotary shaft 1 rotatably supported at a pair of bearings 2, 3 secured on both ends of a casing 4. A generally ring-shaped stator yoke 6 having a stator coil 5 is mounted on the inner surface 4a of the stator casing 4. A plurality of stator teeth 7 are spaced regular intervals apart circumferentially around the inner circumference of the stator yoke 6. Disposed between the bearings 2, 3 are ring-shaped first and second rotor yokes 9, 10 which are arranged in a unitary body on the rotary shaft with a flat magnet 8 therebetween. Each of the rotor yokes 9, 10 has on its circumference, rotor teeth 9a, 10a, and the rotor yokes 9, 10 alternate with each other in polarity. By supplying a driving pulse from an unshown driving circuit to the stator coil 5, the rotor yokes 9, 10 rotate stepwise.

The prior art hybrid-type stepping motor thus constructed has the following problems.

In the hybrid-type stepping motor having the rotor yokes having the flat magnet interposed therebetween, the stator coil wound around each tooth of the stator yoke is positioned inside the casing. Coil winding to each tooth is difficult and increasing the density of coil is difficult, too. When a plurality of motors are coupled to achieve a larger torque, the longitudinal dimension of the shaft becomes too long. This arrangement makes coil winding even more difficult.

In the prior art hybrid-type stepping motor, each of the two-phase, three-phase, five-phase motors needs its own appropriate stator cores.

US 4127802 discloses a high torque bidirectional stepping motor, in which toothed rotor and stator assemblies have pole pieces respectively sandwiching annular permanent magnets and solenoid coils.

The present invention has been developed to solve the above problems, and it is an object of the present invention to provide a low-cost hybrid-type stepping motor, in which the winding and placement of coils are facilitated, the density of coils is increased to give a high efficiency, a two-phase, three-phase, five-phase, and n-phase motor are fabricated, if necessary, using identical stator yokes and rotor yokes are used, torque is increased by the structure in which a flat magnet provides a strong excitation, and if necessary, N of the n-phase motors are advantageously cascaded along the shaft.

A hybrid-type stepping motor according to the present invention is outer-rotor structured, and comprises a pair of bearings spaced apart and provided on a fixed shaft, a rotor case rotatably supported by the bearings, a ring-shaped rotor yoke, mounted on the rotor case, having a plurality of rotor teeth, a stator yoke body made up of n pieces of stator yokes arranged on the fixed shaft, side by side with flat magnets interposed therebetween on the fixed shaft along the direction of the fixed shaft, a plurality of stator teeth formed on the circumference of each stator yoke, n pieces of axially centered circular coil slots formed on the circumferences of the stator yokes, n pieces of coils seated at the circular coil slots, and a pair of sub magnetic plates mounted to the fixed shaft in a manner that the stator yoke body is interposed between sub flat magnets which are interposed between the pair of sub magnetic plates, whereby the stator yokes alternate in magnetic polarity and magnetic flux flows from the sub flat magnets to the sub magnetic plates.

More specifically, the hybrid-type stepping motor of the present invention comprises three yokes for three-phase driving.

More specifically, the hybrid-type stepping motor of the present invention comprises two yokes for two-phase driving.

The hybrid-type stepping motor according to the present invention is inner-outer rotor structured, and comprises a pair of bearings provided on both ends of a casing, a rotary shaft rotatably supported by the bearings, a stator yoke body made up of n pieces of ring-shaped stator yokes arranged side by side with ring-shaped flat magnets interposed therebetween in the inner circumference of the casing along the direction of the rotary shaft, a plurality of stator teeth formed on the inner circumferences of the ring-shaped stator yokes, a pair of sub magnetic plates mounted in the casing in a manner that the stator yoke body is interposed between sub flat magnets which are interposed between the pair of sub magnetic plates, n pieces of axially centered circular coil slots formed on the inner circumferences ring-shaped stator yokes, n pieces of coils seated at the circular coil slots, a rotor yoke mounted on the rotary shaft corresponding to the stator yokes, and a plurality of rotor teeth provided on the circumference of the rotor yoke, whereby magnetic flux flows from the sub flat magnets to the sub magnetic plates.

More specifically, the hybrid-type stepping motor of the present invention has three yokes for three-phase driving.

More specifically, the hybrid-type stepping motor of the present invention has two yokes for two-phase driving.

More specifically, the hybrid-type stepping motor of the present invention is outer-rotor structured such that N pieces of stator yoke bodies with the flat magnets interposed therebetween are cascaded.

More specifically, the hybrid-type stepping motor of the present invention is inner-rotor structured such that N pieces of stator yoke bodies with the flat magnets interposed therebetween are cascaded.

The hybrid-type stepping motor according to the present invention is outer-rotor structured, and comprises a pair of bearings spaced apart and provided on a fixed shaft, a rotor case rotatably supported by the bearings, a ring-shaped rotor yoke, mounted on the rotor case, having a plurality of rotor teeth, a stator yoke body made up of n pieces of stator yokes arranged side by side in the direction of the fixed shaft, each yoke mounted on a corresponding cylinder magnet attached to the fixed shaft, a plurality of stator teeth formed on the circumference of each stator yoke, n pieces of axially centered circular coil slots formed on the circumferences of the stator yokes, n pieces of coils seated at the circular coil slots, a pair of sub magnetic flanges mounted to respective sub cylinder magnets on the fixed shaft with the stator yoke body interposed between the pair of sub magnetic flanges, whereby the stator yokes alternate in magnetic polarity and magnetic flux flows from the sub cylinder magnets to sub magnetic flanges.

More specifically, the hybrid-type stepping motor of the present invention comprises three yokes for three-phase driving.

More specifically, the hybrid-type stepping motor of the present invention has two yokes for two-phase driving.

The hybrid-type stepping motor according to the present invention is inner-outer rotor structured, and comprises a pair of bearings provided at both ends of a casing, a rotary shaft rotatably supported by the bearings, a stator yoke body made up of n pieces of ring-shaped stator yokes arranged side by side in the direction of the rotary shaft on the inner circumference of the casing, each stator yoke resting on a cylinder magnet attached to the inner circumference of the casing, a plurality of stator teeth formed on the inner circumference of the ring-shaped stator yokes, a pair of sub magnetic flanges mounted on respective sub cylinder magnets on the inner circumference of the casing with the stator yoke body interposed between the pair of sub magnetic flanges, n pieces of axially centered circular coil slots formed on the inner circumferences of the ring-shaped stator yokes, n pieces of coils seated at the circular coil slots, a rotor yoke mounted on the rotary shaft correspondingly to the stator yokes, and a plurality of rotor teeth provided on the circumference of the rotor yoke, whereby magnetic flux flows from the sub cylinder magnets to the sub magnetic flanges.

More specifically, the hybrid-type stepping motor of the present invention has three yokes for three-phase driving.

More specifically, the hybrid-type stepping motor of the present invention has two yokes for two-phase driving.

More specifically, the hybrid-type stepping motor of the present invention is an outer-rotor structure type, wherein N pieces of stator yoke bodies with the cylinder magnets employed are cascaded.

More specifically, the hybrid-type stepping motor of the present invention is an inner-rotor structure type, wherein N pieces of stator yoke bodies with the cylinder magnets employed are cascaded.

FIG. 1 shows the structure of the prior art motor.

FIG. 2 is a cross-sectional view showing an outer rotor three-phase hybrid-stepping motor of the present invention.

FIG. 3 is a transverse cross-sectional view taken along X-X' in FIG. 2.

FIG. 4 is an explanatory diagram showing the flows of the magnetic fluxes generated by the flat magnets.

FIG. 5 is an explanatory diagram showing the flows of the magnetic fluxes generated by the coils.

FIG. 6 is an explanatory diagram showing (A) step driving and (B) micro-step driving or sine-wave driving.

FIG. 7 is an explanatory diagram showing the combined magnetic flux at each state caused by the flat magnets and coils when currents flow the coils.

FIG. 8 is an explanatory diagram showing how the rotor teeth are positioned with respect to the stator teeth with reference to FIG. 7.

FIG. 9 is a diagram showing the two-phase version of the structure in FIG. 2.

FIG. 10 is a diagram showing the five-phase version of the structure in FIG. 2.

FIG. 11 is a diagram showing two two-phase motors cascaded having two stator yoke bodies of FIG. 9.

FIG. 12 is a diagram showing the structure of the inner rotor type of FIG. 2.

FIG. 13 is the cross-sectional view showing the structure of another embodiment.

FIG. 14 is an explanatory diagram showing the flows of the magnetic fluxes generated by the flat magnets.

FIG. 15 is an explanatory diagram showing the flows of the magnetic fluxes generated by the coils.

FIG. 16 is an explanatory diagram showing the combined magnetic fluxes at each state caused by the cylinder magnets and coils when currents flow the coils.

FIG. 17 is an explanatory diagram showing how the rotor teeth are positioned with respect to the stator teeth with reference to FIG. 16.

FIG. 18 is a diagram showing a two-phase structure.

FIG. 19 is a diagram showing the five-phase structure.

FIG. 20 is a diagram showing two two-phase motors cascaded having two stator yoke bodies.

FIG. 21 a diagram showing the structure of the inner rotor type.

Referring to the drawings, embodiments of the hybrid-type stepping motor of the present invention are now discussed. Components identical or equivalent to those with reference to the prior art are designated with the same reference numerals.

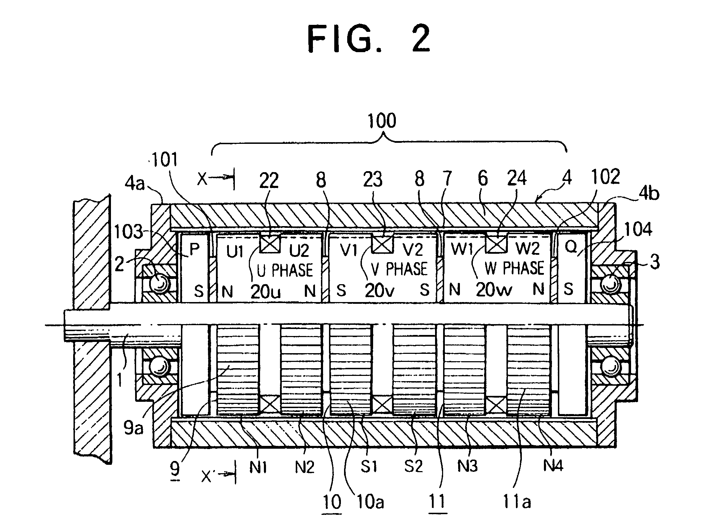

FIG. 2 shows an outer-rotor structured hybrid-type stepping motor. Designated 1 is a fixed shaft of a non-magnetic material on which a pair of bearings 2, 3 spaced apart from each other are mounted. A rotor case 4 constructed of a front end cover 4a, a rear end cover 4b and a cylindrical rotor yoke 6 is rotatably supported at the bearings 2, 3. A plurality of rotor teeth 7 are mounted on the inner circumference of the rotor yoke 6 of the rotor case 4.

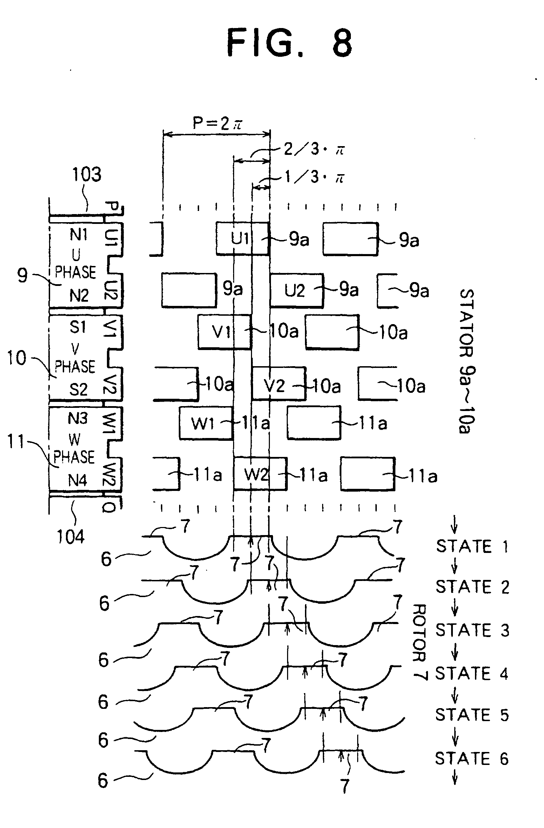

First, second and third ring-shaped stator yokes 9, 10, 11 arranged with flat magnets 8 therebetween side by side on the fixed shaft 1 in the direction of the fixed shaft are structured in a unitary body including the flat magnets 8, and first, second and third axially centered circular coil slots 20u, 20v, and 20w are formed on the circumferences of the stator yokes 9, 10, and 11. The stator yokes 9 through 11 constitute a stator yoke body 100, sub flat magnets 101, 102 are secured on the fixed shaft 1, to both ends of the stator yoke body 100, respectively, and first and second sub magnetic plates 103, 104 are secured on the fixed shaft 1, to the sub flat magnets 101, 102, respectively. Seated in the coil slots 20u, 20v, and 20w are a first coil 22 for phase U, a second coil 23 for phase V, and a third coil 24 for phase W, each wound in a solenoid fashion (the coils 22, 23, 24 are automatically wound by a coil winding machine). The first stator yoke 9 has, on its circumference, first and second N poles N1 and N2, between which the first coil 22 is interposed, the second stator yoke 10 has, on its circumference, first and second S poles S1 and S2, between which the second coil 23 is interposed, and the third stator yoke 11 has, on its circumference, third and fourth N poles N3 and N4, between which the third coil 24 is interposed, and the rotor teeth 7 correspond to each of the poles N1, N2, S1, S2, N3, and N4, and the poles N1, N2, S1, S2, N3, and N4 have, on their circumferences, a plurality of stator teeth 9a, 10a, and 11a having the same pitch as that of the rotor teeth 7. As shown in the explanatory diagram in FIG. 8, the stator teeth 9a, 10a and 11a are structured so that the poles N1 and N2 are shifted off by a 1/2 pitch (1π) with each other. The poles S1 and S2 are shifted off by a 1/2 pitch (1π) with each other. The poles N3 and N4 are shifted off by a 1/2 pitch (1π) with each other. The stator teeth 9a, 10a and 11a are structured so that the poles N1 and N2, the poles S1 and S2, and the poles N3 and N4 are shifted off by 1/6 pitch (π/3) (1/2n pitch, n: number of phases), respectively. The sub magnetic plates 103 and 104 are used only to form magnetic flux path.

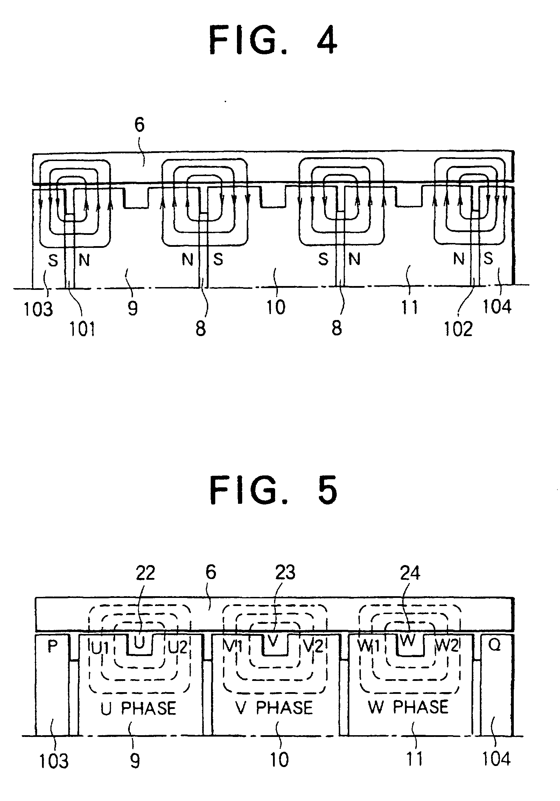

The operation of the motor is now discussed. FIG. 4 shows the flows of magnetic fluxes through the flat magnets 8 and sub flat magnets 101, 102, and FIG. 4 also shows that the flows of magnetic fluxes are equalized by the magnetic plates 103, 104. If the sub flat magnets 101, 102 and the sub magnetic plates 103, 104 are not used, the magnetic fluxes generated by the two flat magnets 8 concentrate in the phase V stator yoke 10, and the flux in the phase V stator yoke 10 is (twice) stronger than that in the phase U or phase W stators, destroying the uniformity within each phase. As a result, this renders the motor unusable, and thus the function of the sub flat magnets and sub magnetic plates is important. Because of these, the magnetic fluxes are made uniform at their stronger level. The sub flat magnets assures uniformity in flux between phases. FIG. 5 shows the magnetic fluxes generated by the coils 22, 23, and 24 of phases U, V, and W, and the directions of the magnetic fluxes are determined by the directions of the currents flowing through the coils 22, 23, 24, respectively.

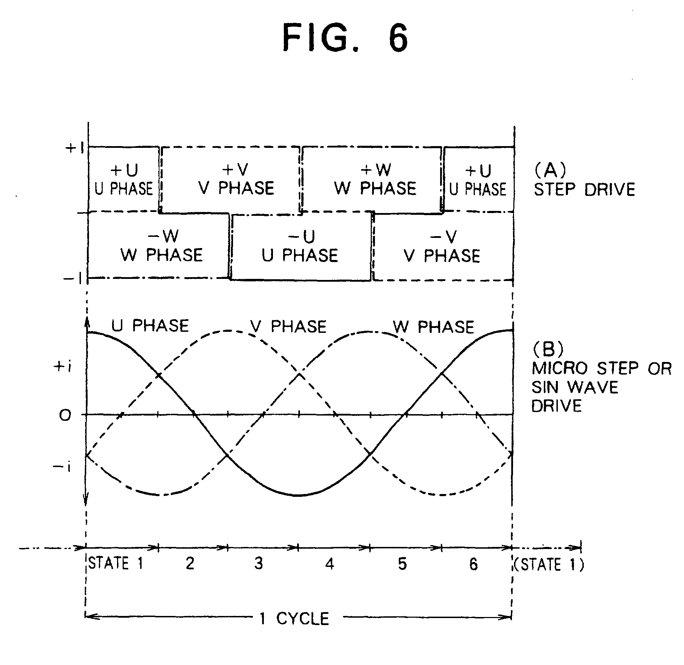

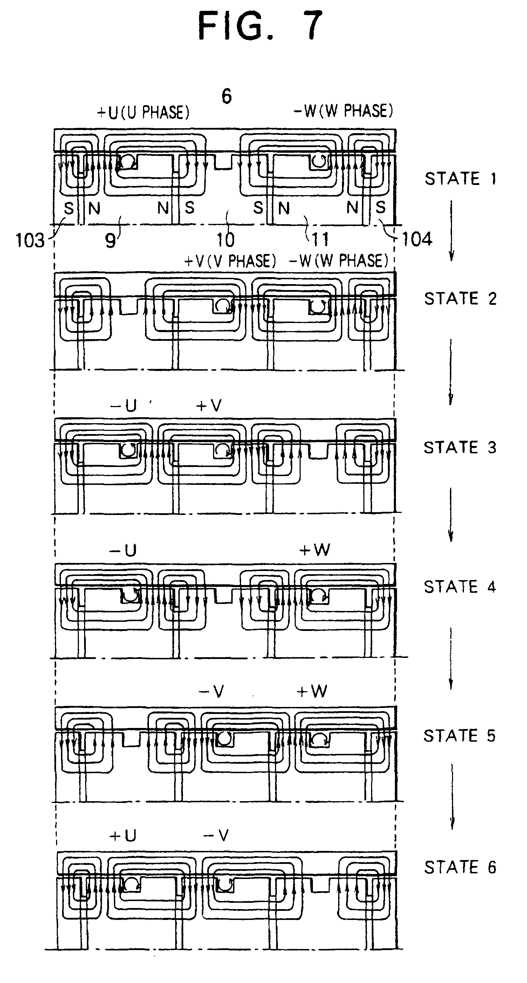

FIG. 6 specifically shows how each of the coils 22, 23, 24 is current driven, and FIG. 6(A) shows the step driving in which the strength of driving current I is not varied, but switched on and off. FIG. 6(B) shows the prior art micro-step driving or sine-wave driving, in which the strength of current I is gradually varied. In either case, one full cycle is divided into 6 states (state 1 through state 6), which are explained with reference to FIG. 7.

In FIG. 7, as in the prior art, combined are magnetic fluxes generated by the flat magnets 8, sub flat magnets 101, 102 and currents at each of the states 1 through 6 when the step driving in FIG. 6(A) or micro-step or sine-wave driving in FIG. 6(B) is performed.

In this case, again, the sub magnetic plates 103, 104 and sub flat magnets 101, 102 function effectively and regularly in forming the entire distribution of the combined magnetic fluxes.

FIG. 8 shows the relative position of the rotor teeth 7 with respect to each of the stator teeth 9a, 10a, and 11a corresponding to FIG. 7, and the rotor teeth 7 move sequentially in response to the states 1 through 6. The three-phase motor thus functions as a motor by means of the sub magnetic plates 103, 104 and the sub flat magnets 101, 102 attached to both ends of the stator yoke body 100.

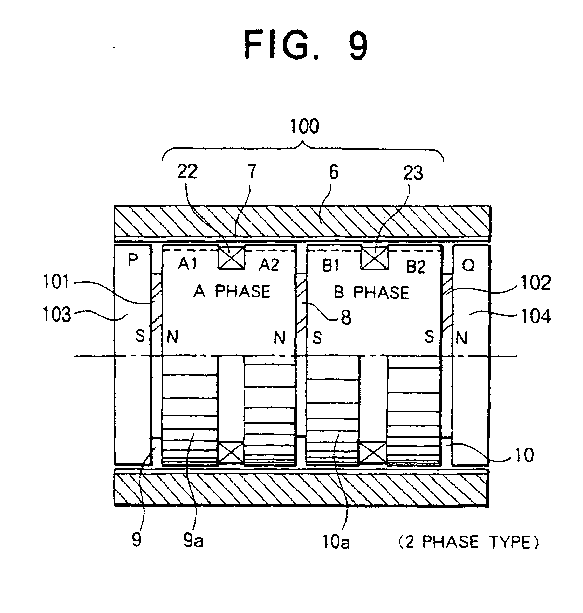

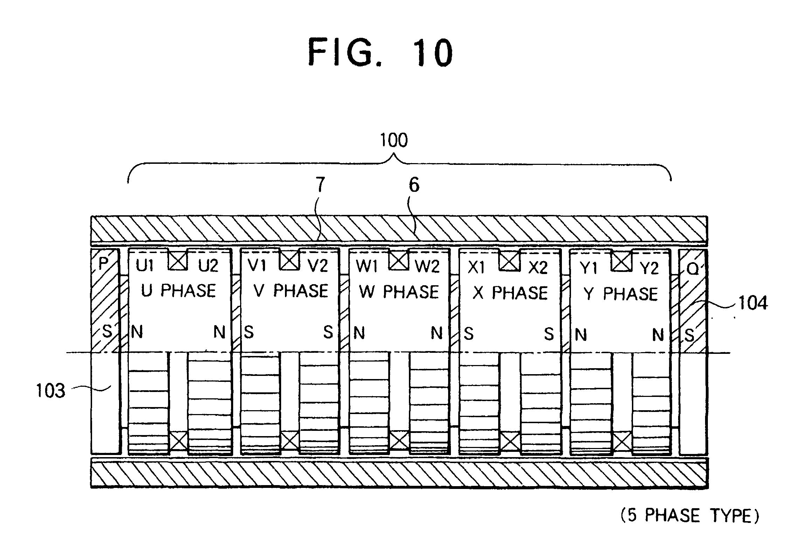

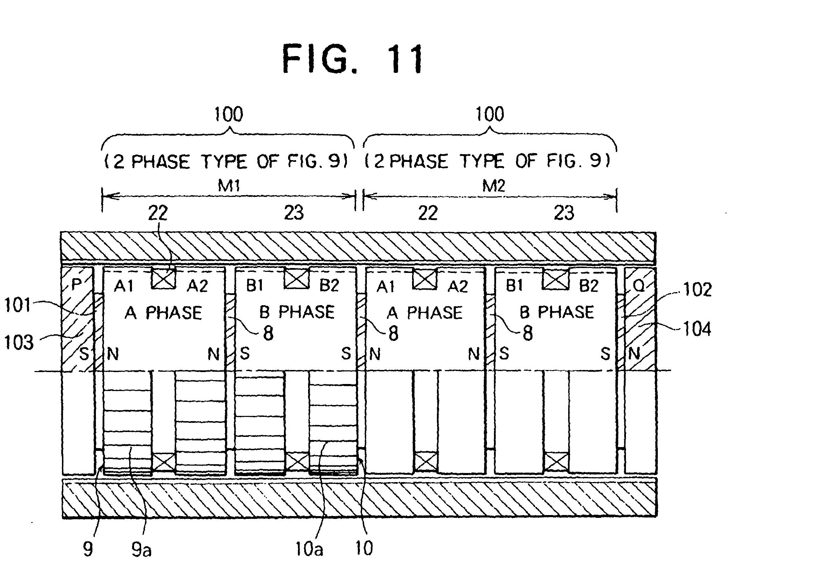

FIG. 9 shows a two-phase arrangement in which the structure in FIG. 2 is implemented.

In the stator yokes 9, 10, teeth A1 and A2 are shifted off with each other by a 1/2 pitch, and teeth B1 and B2 are shifted off with each other by a 1/2 pitch, and the phases A and B of stator yokes 9, 10 are shifted off by a 1/2n pitch, namely a 1/4 pitch. In case of the two phase, the motor functions at any rate without the sub flat magnets 101, 102 and the sub magnetic plates 103, 104. If they are used as shown the present invention in FIG. 9, however, the stator yokes 9 and 10 are excited more strongly and uniformly from both sides, a stronger torque results and an irregularity in torque generation is controlled.

FIG. 10 shows a five-phase motor in which the present invention is embodied, wherein there is a 1/2 pitch shift between the poles U1 and U2 of phase U, between the poles V1 and V2 of phase V, between the poles W1 and W2 of phase W, between the poles X1 and X2 of phase X, and between the poles Y1 and Y2 of phase Y, and an inter-phase shifting is 1/2n = 1/10 (n=5).

As shown in the structures in FIG. 2 through FIG. 10, any motor from two-phase to three-phase to n-phase motor, regardless of whether it is an odd-phase motor or an even-phase motor, is constructed.

FIG. 11 shows two two-phase motors of FIG. 9 in which the two two-phase motors (M1 and M2) are serially cascaded. M1 and M2 in FIG. 11 employ two stator yoke bodies 100 of FIG. 9 with a flat magnet 8 interposed therebetween, and the sub flat magnets 101, 102 and the sub magnetic plates 103, 104 are mounted on both ends in the same way as in FIG. 9. Therefore, by cascading a plurality of stator yoke bodies 100, for example, N stator yoke bodies, a cascaded outer rotor or inner rotor hybrid-stepping motor having an arbitrary number N pieces of stator yoke bodies 100 is constructed. Unlike the case of two independent M1 and M2 arranged on the same shaft, in this case, again, the flat magnet 8 between M1 and M2, the sub flat magnets 101, 102 and the sub magnetic plates 103, 104 work advantageously in the same way as in the structure in FIG. 2.

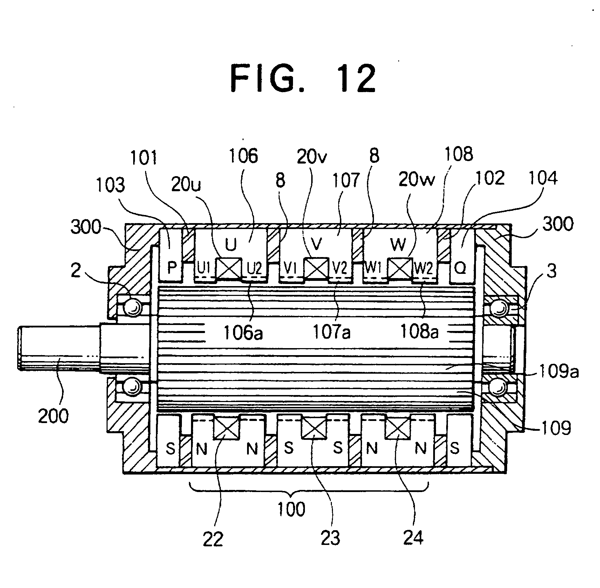

Although FIG. 11 shows the two-phase motor of FIG. 9, the same principle is obviously applied to FIG. 2, FIG. 10 and further FIG. 12 to be described later. Generally speaking, N pieces of n-phase motors may be cascaded to result in a larger and required torque.

FIG. 12 shows an inner rotor hybrid-type stepping motor in which the present invention is implemented in the inner rotor structured hybrid-type stepping motor in FIG. 1, wherein on the inner circumference of a stator case 300 of a non-magnetic material, first, second and third ring-shaped stator yokes 106, 107, and 108 side by side with ring-shaped flat magnets 8 therebetween in the direction of the shaft are arranged in a unitary body to form a three-phase stator yoke body 100, and the stator yokes 106, 107 and 108 alternate in polarity.

The sub flat magnets 101, 102 and sub magnetic plates 103, 104 are arranged on both sides of the stator yoke body 100 to form magnetic circuits on both sides. The coil slots 20u, 20v, and 20w of the ring-shaped stator yokes 106, 107, and 108 have respectively first, second and third coils 22, 23, 24, each wound in a solenoid fashion, and a rotary shaft 200 of a magnetic material has rotor yokes 109 corresponding to each of the stator yokes 106, 107 and 108, and the rotor yoke 109 has, on its circumference, a plurality of teeth 109a. The structure in FIG. 12 is an inner rotor type, which is in contrast to FIG. 2, and its step driving is based on the same principle of the operation shown in FIG. 4 through FIG. 8.

In the same manner as in FIG. 9 and FIG. 11, a two-phase inner rotor version and a five-phase inner rotor version of the structure of FIG. 12 are constructed, and more generally, an n-phase inner rotor hybrid-type motor is constructed.

As two of the structures in FIG. 9 are cascaded as shown in FIG. 11, N pieces of n-phase inner rotor hybrid-type motors are cascaded in the same manner as in FIG. 11. Although the above discussion assumes that each of the coils 22, 23 is of a bipolar winding of the prior art, the prior art unipolar winding offers equally advantageous effect. Although the above embodiments are based on the prior art single phase excitation, the motor may be driven in two-phase excitation or single-two-phase excitation. Shifting in pitch in each of the teeth 7, 9a, 10a, 11a, and 109a is a relative value, and the same operation is performed if any teeth are shifted relative to the other. The motor may be configured in any convenient shape, for example, in a flat large-diameter structure, a thin thickness structure, a fine elongated structure.

Referring to the drawings, another embodiment of the hybrid-type stepping motor of the present invention is now discussed. Components identical or equivalent to those with reference to the prior art are designated with the same reference numerals.

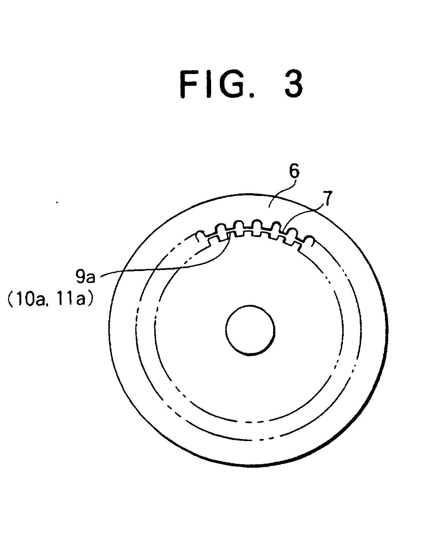

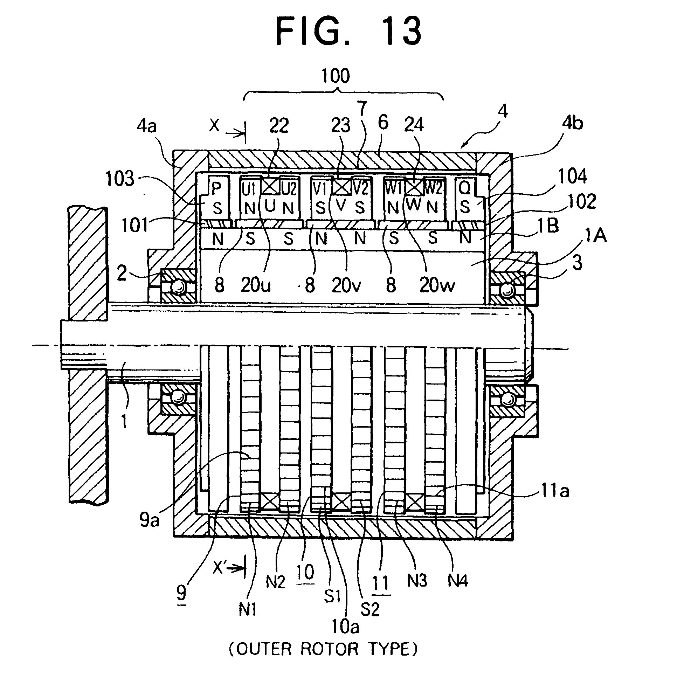

FIG. 13 and FIG. 3 show an outer-rotor structured hybrid-type stepping motor, wherein designated 1 is a fixed shaft of a non-magnetic material on which a pair of bearings 2, 3 spaced apart from each other are mounted, and a rotor case 4 constructed of a front end cover 4a, a rear end cover 4b and a cylindrical rotor yoke 6 is rotatably supported at the bearings 3, 4. A plurality of rotor teeth 7 are provided on the inner circumference of the rotor yoke 6 of the rotor case 4.

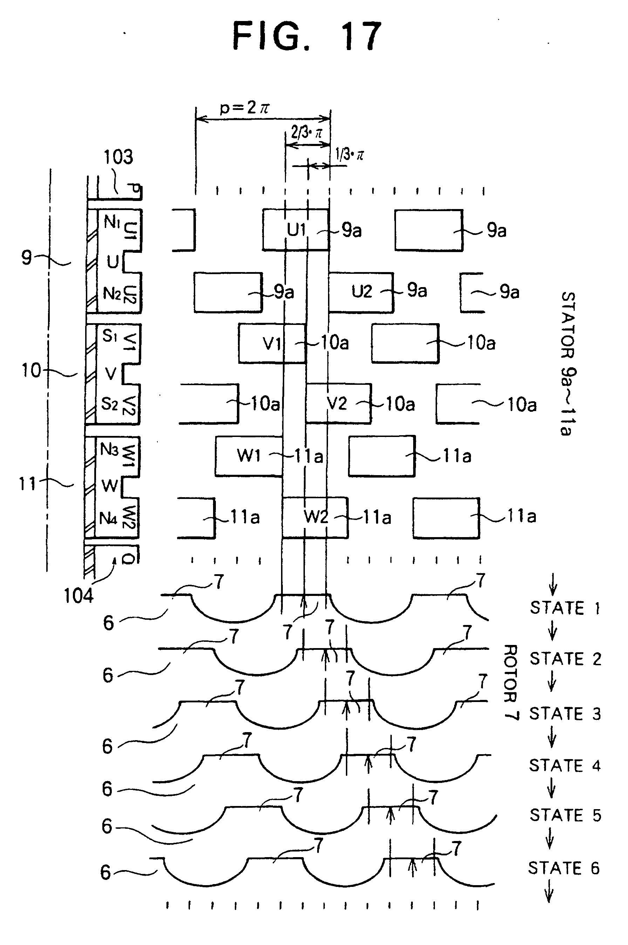

Mounted on the fixed shaft yoke 1B on the circumference of the fixed shaft fixture 1A of the fixed shaft 1 are cylinder magnets 8 on which first, second and third ring-shaped stator yokes 9, 10, 11 are mounted to form a unitary body in a manner that the cylinder magnets 8 are radially interposed between the stator yokes and the fixed shaft fixture 1A, and first, second and third axially centered circular coil slots 20u, 20v, and 20w on the circumferences of the stator yokes 9, 10, and 11. The stator yokes 9 through 11 constitute a stator yoke body 100, sub cylinder magnets 101, 102 are secured on the fixed shaft 1, to both ends of the stator yoke body 100, respectively, and first and second sub magnetic flanges 103, 104 are to the sub cylinder magnets 101, 102, respectively. Seated in the coil slots 20u, 20v, and 20w are a first coil 22 for phase U, a second coil 23 for phase V, and a third coil 24 for phase W, each wound in a solenoid fashion (the coils 22, 23, 24 are beforehand automatically wound from outside to the circumferences of the yokes by a coil winding machine). The first stator yoke 9 has, on its circumference, first and second N poles N1 and N2, between which the first coil 22 is interposed, the second stator yoke 10 has, on its circumference, first and second S poles S1 and S2, between which the second coil 23 is interposed, and the third stator yoke 11 has, on its circumference, third and fourth N poles N3 and N4, between which the third coil 24 is interposed, and the rotor teeth 7 correspond to each of the poles N1, N2, S1, S2, N3, and N4, and the poles N1, N2, S1, S2, N3, and N4 have, on their circumferences, a plurality of stator teeth 9a, 10a, and 11a having the same pitch as that of the rotor teeth 7. As shown in the explanatory diagram in FIG. 17, the stator teeth 9a, 10a and 11a are structured so that the poles N1 and N2 are shifted off by a 1/2 pitch (1π) with each other, that the poles S1 and S2 are shifted off by a 1/2 pitch (1π) with each other and that the poles N3 and N4 are shifted off by a 1/2 pitch (1π) with each other, and also the stator teeth 9a, 10a and 11a are structured so that the poles N1 and N2, the poles S1 and S2, and the poles N3 and N4 are shifted off by 1/6 pitch (π/3) (1/2n pitch, n: number of phases), respectively. The sub magnetic flanges 103 and 104 are used only to form magnetic flux path.

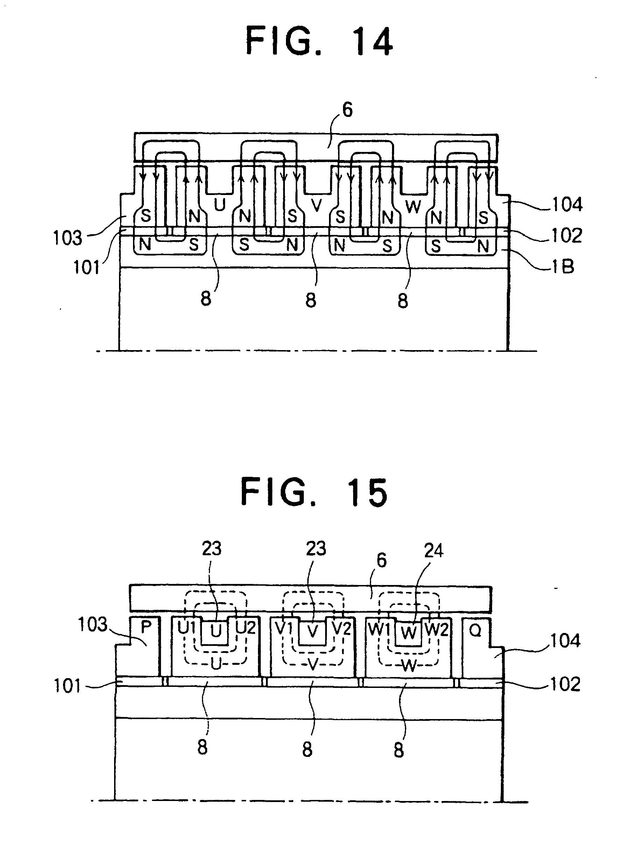

The operation of the motor is now discussed. FIG. 14 shows the flows of magnetic fluxes through the cylinder magnets 8 and sub cylinder magnets 101, 102, and FIG. 14 also shows that the flows of magnetic fluxes are equalized by the magnetic flanges 103, 104. If the sub cylinder magnets 101, 102 and the sub magnetic flanges 103, 104 are not used, the magnetic fluxes generated by the two cylinder magnets 8 concentrate in the phase V stator yoke 10, and the flux in the phase V stator yoke 10 is (twice) stronger than that in the phase U or phase W stators, destroying the uniformity between phases. As a result, this renders the motor unusable, and thus the function of the sub cylinder magnets and sub magnetic flanges is important, and because of these, magnetic paths are additionally formed resulting uniformity in flux in each phase. FIG. 15 shows the magnetic fluxes generated by the coils 22, 23, and 24 of phases U, V, and W, and the directions of the magnetic fluxes are determined by the directions of the currents flowing through the coils 22, 23, 24, respectively.

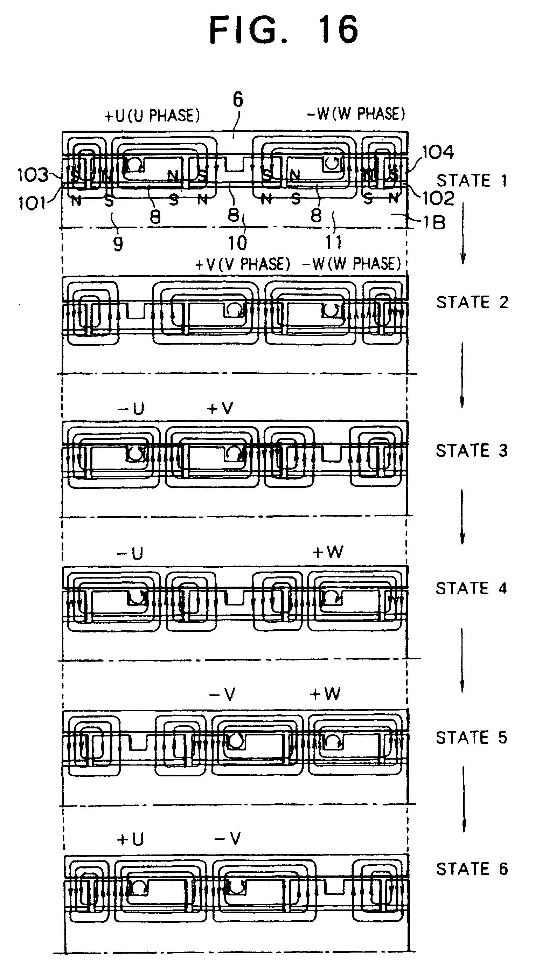

FIG. 6 specifically shows how each of the coils 22, 23, 24 is current driven, and FIG. 6(A) shows the step driving in which the strength of driving current I is not varied, but switched on and off. FIG. 6(B) shows the prior art micro-step driving or sine-wave driving, in which the strength of current I is gradually varied. In either case, one full cycle is divided into 6 states (state 1 through state 6), which are explained with reference to FIG. 16.

In FIG. 16, as in the prior art, combined are the magnetic fluxes generated by the cylinder magnets 8, sub cylinder magnets 101, 102 and currents at each of the states 1 through 6 when the step driving in FIG. 6(A) or micro-step or sine-wave driving in FIG. 6(B) is performed.

In this case, again, the sub magnetic flanges 103, 104 and sub cylinder magnets 101, 102 function effectively and regularly in forming the entire distribution of the combined magnetic fluxes.

FIG. 17 shows the relative position of the rotor teeth 7 with respect to each of the stator teeth 9a, 10a, and 11a corresponding to FIG. 16, with the relative position shifting regularly from state 1 through to state 6, and with the rotor teeth 7 rotating sequentially. The three-phase motor thus functions as a motor by means of the sub magnetic flanges 103, 104 and the sub cylinder magnets 101, 102 attached to both ends of the stator yoke body 100.

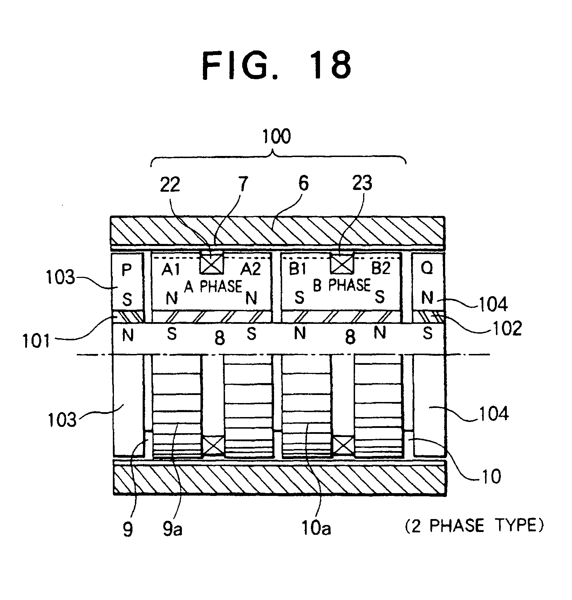

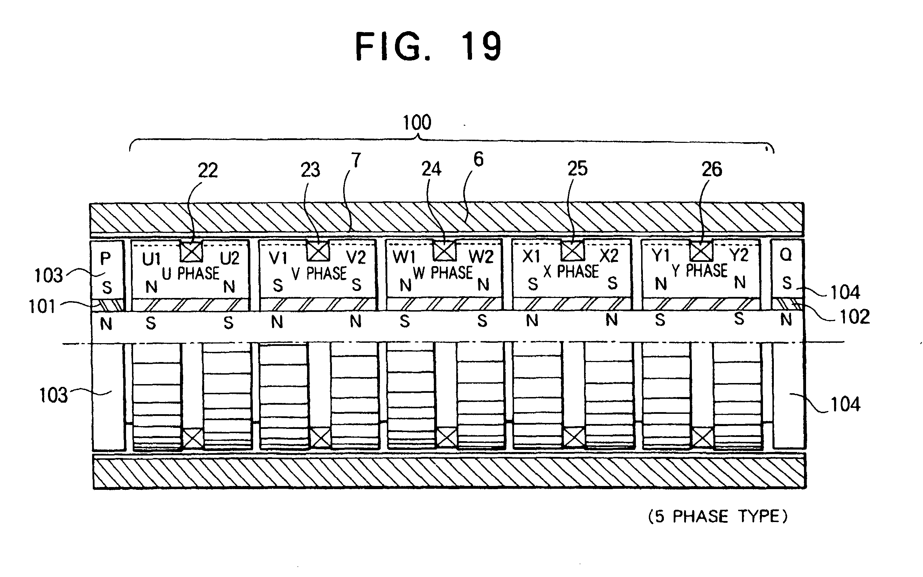

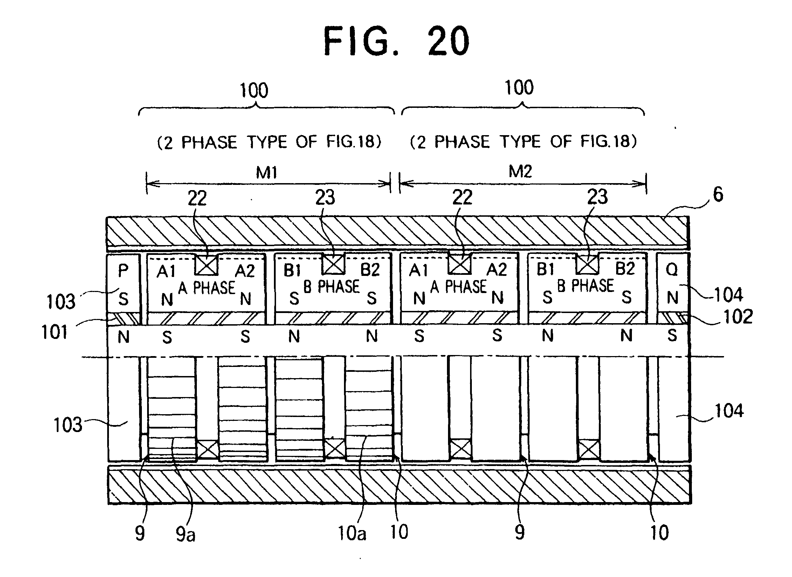

FIG. 18 shows a two-phase arrangement in which the structure in FIG. 13 is implemented.

In the stator yokes 9, 10, teeth A1 and A2 are shifted off with each other by a 1/2 pitch, and teeth B1 and B2 are shifted off with each other by a 1/2 pitch, and the phases A and B of stator yokes 9, 10 are shifted off by a 1/2n pitch, namely a 1/4 pitch. In case of the two phase, the motor functions at any rate without the sub cylinder magnets 101, 102 and the sub magnetic flanges 103, 104. If they are used as shown the present invention in FIG. 18, however, the stator yokes 9 and 10 are excited more strongly and uniformly from both sides, a stronger torque results and an irregularity in torque generation is controlled.

FIG. 19 shows a five-phase motor in which the present invention is embodied, wherein there is a 1/2 pitch shift between the poles U1 and U2 of phase U, between the poles V1 and V2 of phase V, between the poles W1 and W2 of phase W, between the poles X1 and X2 of phase X, and between the poles Y1 and Y2 of phase Y, and an inter-phase shifting is 1/2n = 1/10 (n=5).

As shown in the structures in FIG. 13 through FIG. 19, any motor from two-phase to three-phase to n-phase motor, regardless of whether it is an odd-phase motor or an even-phase motor, is constructed.

FIG. 20 shows two two-phase motors of FIG. 18 in which the two two-phase motors (M1 and M2) are serially cascaded. M1 and M2 in FIG. 20 employ two stator yoke bodies 100 of FIG. 18 with a cylinder magnet 8 provided for each yoke, and the sub cylinder magnets 101, 102 and the sub magnetic flanges 103, 104 are mounted on both ends in the same way as in FIG. 18. Therefore, by cascading a plurality of stator yoke bodies 100, for example, N pieces of stator yoke bodies, a cascaded outer rotor or inner rotor (not shown) hybrid-stepping motor having an arbitrary number N pieces of stator yoke bodies 100 is constructed. Unlike the case of two independent M1 and M2 arranged on the same shaft, in this case, again, a magnetic circuit is formed between M1 and M2, and the sub cylinder magnets 101, 102 and the sub magnetic flanges 103, 104 work advantageously in the same way as in the structure in FIG. 13.

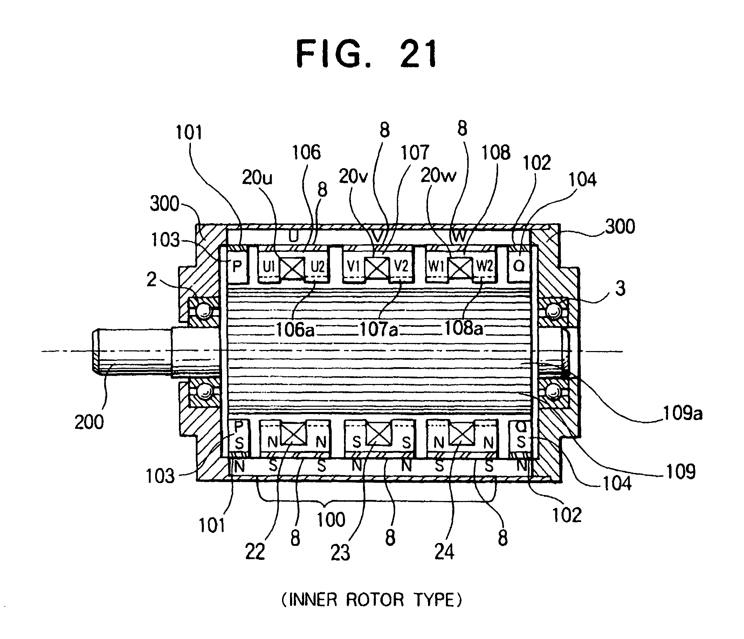

Although FIG. 20 shows the two-phase motor of FIG. 18, the same principle is obviously applied to FIG. 13, FIG. 19 and further FIG. 21 to be described later. Generally speaking, N pieces of n-phase motors may be cascaded to result in a larger and required torque.

FIG. 21 shows an inner rotor hybrid-type stepping motor in which the present invention is implemented in the inner rotor structured hybrid-type stepping motor in FIG. 1, wherein on the cylinder magnets attached the inner circumference of a stator case 300, first, second and third ring-shaped stator yokes 106, 107, and 108 side by side in the direction of the shaft are arranged in a unitary body to form a three-phase stator yoke body 100, and the stator yokes 106, 107 and 108 alternate in polarity.

The sub cylinder magnets 101, 102 and sub magnetic flanges 103, 104 are arranged on both sides of the stator yoke body 100 to form magnetic circuits on both ends. The coil slots 20u, 20v, and 20w of the ring-shaped stator yokes 106, 107, and 108 have respectively first, second and third coils 22, 23, and 24, each wound in a solenoid fashion, and a rotary shaft 200 of a magnetic material has a elongated rotor yoke 109 corresponding to each of the stator yokes 106, 107 and 108, and the rotor yoke 109 has, on its circumference, a plurality of teeth 109a. The structure in FIG. 21 is an inner rotor type, which is in contrast to FIG. 13, and its step driving is based on the same principle of the operation shown in FIG. 14 through FIG. 17. In the same manner as in FIG. 18 and FIG. 20, a two-phase inner rotor version and a five-phase inner rotor version of the structure of FIG. 21 are constructed, and more generally, an n-phase inner rotor hybrid-type motor is constructed.

As two of the structures in FIG. 18 are cascaded as shown in FIG. 20, N pieces of n-phase inner rotor hybrid-type motors are cascaded in the same manner as in FIG. 20. Although the above discussion assumes that each of the coils 22, 23 is of a bipolar winding of the prior art, the prior art unipolar winding offers equally advantageous effect. Although the above embodiments are based on the prior art single phase excitation, the motor may be driven in two-phase excitation or single-two-phase excitation. Shifting in pitch in each of the teeth 7, 9a, 10a, 11a, and 109a is a relative value, and the same operation is performed if any teeth are shifted relative to the other. The motor may be configured in any convenient shape, for example, in a flat large-diameter structure, a thin thickness structure, a fine elongated structure.

The hybrid-type stepping motor thus constructed of the present invention offers the following advantages. Since in the structure in FIGS. 2-13, the coils are mounted on the outer circumferences of the stator yokes, a coil winding operation is extremely easy, substantially reducing the cost of this type of outer rotor hybrid-type stepping motor. In the structure in FIGS. 12 and 21, coils wound in a solenoid fashion are inserted from inside the stator yokes, and its manufacturing cost is substantially low compared to the prior art. Furthermore, since the sub cylinder magnets as magnetic flux paths are provided on both sides of the motor, magnetic poles are formed at both magnet sides, easily achieving a larger torque, and an n-phase stepping motor is easily constructed as necessary.

For the n-phase, the stator yokes are simply shifted off by a 1/2n pitch, and identical stator yokes and rotor yokes are used for 2-phase to n-phase. An outer rotor or inner rotor hybrid-type stepping motor having N pieces of stator yoke bodies may be constructed.

## Claims

1. A hybrid-type stepping motor having an outer rotor structure comprising a pair of bearings (2, 3) spaced apart and mounted on a fixed shaft (1), a rotor case (4) rotatably supported by the bearings (2, 3), a ring-shaped rotor yoke (6), mounted on the rotor case (4), having a plurality of rotor teeth (7), a stator yoke body (100) made up of n pieces of stator yokes (9, 10, 11) arranged side by side with flat magnets (8) interposed therebetween on the fixed shaft (1) along the direction of the fixed shaft (1), a plurality of stator teeth (9a, 10a, 11a) formed on the circumferences of the stator yokes (9, 10, 11), n axially centred circular coil slots (20u, 20v, 20w), one slot formed on the circumferences of each stator yoke (9, 10, 11), n coils (22, 23, 24) seated at the circular coil slots (20u, 20v, 20w), **characterized in that** the stepping motor comprises a pair of sub magnetic plates (103, 104) mounted to the fixed shaft (1) in a manner that the stator yoke body (100) is interposed between sub flat magnets (101, 102) which are interposed between the sub magnetic plates (103, 104), whereby the stator yokes (9, 10, 11) alternate in magnetic polarity and magnetic flux flows from the sub flat magnets (101, 102) to the sub magnetic plates (103, 104).

2. A hybrid-type stepping motor having an inner rotor structure comprising a pair of bearings (2, 3) mounted on both ends of a casing (300), a rotary shaft(200) rotatably supported by the bearings (2, 3), a stator yoke body (100) made up of n pieces of ring-shaped stator yokes (106, 107, 108) arranged side by side with ring-shaped flat magnets (8) interposed therebetween in the inner circumference of the casing (300) along the direction of the rotary shaft (300), a plurality of stator teeth formed on the inner circumferences of the ring-shaped stator yokes (106, 107, 108), n axially centred circular coil slots (20u, 20v, 20w), one formed on the inner circumferences of each ring-shaped stator yokes (106, 107, 108), n coils (22, 23, 24) seated at the circular coil slots (20u, 20v, 20w), a rotor yoke (109) mounted on the rotary shaft (200) corresponding to the stator yokes (106, 107, 108), and a plurality of rotor teeth (109a), provided on the circumference of the rotor yoke (109), **characterized in that** the stepping motor comprises a pair of sub magnetic plates (103, 104) mounted inside the casing (300) in a manner that the stator yoke body (100) is interposed between sub flat magnets (101, 102) which are interposed between the sub magnetic plates (103, 104), whereby magnetic flux flows from the sub flat magnets (101, 102) to the sub magnetic plates (103, 104).

3. The hybrid-type stepping motor having an outer rotor structure according to claim 1, wherein N pieces of, namely, a plural number pieces of, stator yoke bodies (9, 10, 11) with the flat magnets (8) interposed therebetween are cascaded.

4. The hybrid-type stepping motor having an inner rotor structure according to claim 2, wherein N pieces of, namely, a plural number pieces of stator yoke bodies (106, 107, 108) with the flat magnets (8) interposed therebetween are cascaded.

5. A hybrid-type stepping motor having an outer rotor structure comprising a pair of bearings (2, 3) spaced apart and mounted on a fixed shaft (1), a rotor case (4) rotatably supported by the bearings (2, 3), a ring-shaped rotor yoke (6), mounted on the rotor case (4), having a plurality of rotor teeth (7), a stator yoke body (100) made up of n pieces of stator yokes (9, 10, 11) arranged side by side in the direction of the fixed shaft (1), each yoke mounted on a corresponding cylinder magnet (8) attached to the fixed shaft (1), a plurality of stator teeth (9a, 10a, 11a) formed on the circumferences of the stator yokes (9, 10, 11), n axially centered circular coil slots (20u, 20v, 20w) formed on the circumferences of the stator yokes (9,10, 11), n coils (22, 23, 24) seated at the circular coil slots (20u, 20v, 20w), **characterized in that** the stepping motor comprises a pair of sub magnetic flanges (103, 104) mounted to respective sub cylinder magnets (101, 102) on the fixed shaft (1) with the stator yoke body (100) interposed between the pair of sub magnetic flanges (103, 104), whereby the stator yokes (9, 10, 11) alternate in magnetic polarity and magnetic flux flows from the sub cylinder magnets (101, 102) to the sub magnetic flanges (103, 104).

6. A hybrid-type stepping motor having an inner rotor structure comprising a pair of bearings (2, 3) mounted at both ends of a casing (300), a rotary shaft(200) rotatably supported by the bearings (2, 3), a stator yoke body (100) made up of n pieces of ring-shaped stator yokes (106, 107, 108) arranged side by side in the direction of the rotary shaft (200) on the inner circumference of the casing (300), each stator yoke (106, 107, 108) resting on a cylinder magnet (8) attached to the inner circumference of the casing (300), a plurality of stator teeth formed on the inner circumferences of the ring-shaped stator yokes (106, 107, 108),
n axially centered circular coil slots (20u, 20v, 20w) formed on the inner circumferences of the ring-shaped stator yokes (106, 107, 108),
n coils (22, 23, 24) seated at the circular coil slots (20u, 20v, 20w), a rotor yoke (108) mounted on the rotary shaft (200) correspondingly to the stator yokes (106, 107, 108), and a plurality of rotor teeth provided on the circumference of the rotor yoke (109), **characterized in that** the stepping motor comprises a pair of sub magnetic flanges (103, 104) mounted on respective sub cylinder magnets (101,102) on the inner circumference of the casing (300) with the stator yoke body (104) interposed between the pair of sub magnetic flanges (103, 104), whereby magnetic flux flows from the sub cylinder magnets (103, 104) to the sub magnetic flanges (101, 102).

7. A hybrid-type stepping motor according to any preceding claim wherein three stator yokes (9, 10, 11, 106, 107, 108) are employed for three-phase driving.

8. The hybrid-type stepping motor according to any of claims 1 to 6 wherein two stator yokes (9, 10, 11, 106, 107, 108) are employed for two-phase driving.

9. The hybrid-type stepping motor having an outer rotor structure according to claims 5 or 7, wherein a plurality of stator yoke bodies, namely N pieces of stator yoke bodies with the cylinder magnets (8) employed are cascaded.

10. The hybrid-type stepping motor having an inner rotor structure according to claims 6 or 8, wherein a plurality of stator yoke bodies, namely N pieces of stator yoke bodies with the cylinder magnets (8) employed are cascaded.

## Patentansprüche

1. Schrittmotor hybriden Typs mit einem Außenrotoraufbau, umfassend ein Paar von Lagern (2, 3), die auseinander beabstandet und an einer fixierten Welle (1) angebracht sind, ein Rotorgehäuse (4), das durch die Lager (2, 3) drehbar gestützt wird, ein ringförmiges Rotorjoch (6), das an dem Rotorgehäuse (4) angebracht ist, mit einer Vielzahl von Rotorzähnen (7), einen Statorjochkörper (100), bestehend aus n Stücken von Statorjochen (9, 10, 11), angeordnet Seite an Seite mit flachen Magneten (8), zwischengestellt auf der fixierten Welle (1) entlang der Richtung der fixierten Welle (1), eine Vielzahl von Statorzähnen (9a, 10a, 11a), die an den Kreisumfängen der Statorjoche (9, 10, 11) gebildet sind, n axial zentrierte kreisförmige Spulenschlitze (20u, 20v, 20w), wobei ein Schlitz an den Kreisumfängen von jedem Statorjoch (9, 10, 11) gebildet wird, n Spulen (22, 23, 24), die in den kreisförmigen Spulenschlitzen (20u, 20v, 20w) eingesetzt sind, **gekennzeichnet dadurch, dass** der Schrittmotor ein Paar von unteren Magnetplatten (103, 104) umfasst, die an der fixierten Welle (1) auf eine Art und Weise angebracht sind, dass der Statorjochkörper (100) zwischen die unteren flachen Magneten (101, 102) zwischengestellt ist, die zwischen die unteren Magnetplatten (103, 104) zwischengestellt sind, wodurch die Statorjoche (9, 10, 11) in der Magnetpolarität wechseln und ein magnetischer Fluss von den unteren flachen Magneten (101, 102) zu den unteren Magnetplatten (103, 104) strömt.

2. Schrittmotor hybriden Typs mit einem Innenrotoraufbau, umfassend ein Paar von Lagern (2, 3), die an beiden Enden eines Gehäuses (300) angebracht sind, eine rotierende Welle (200), die durch die Lager (2, 3) drehbar gestützt wird, einen Statorjochkörper (100), bestehend aus n Stücken von ringförmigen Statorjochen (106, 107, 108), angeordnet Seite an Seite mit ringförmigen flachen Magneten (8), zwischengestellt in dem inneren Kreisumfang des Gehäuses (300) entlang der Richtung der rotierenden Welle (300), eine Vielzahl von Statorzähnen, die an den inneren Kreisumfängen der ringförmigen Statorjoche (106, 107, 108) gebildet sind, n axial zentrierte kreisförmige Spulenschlitze (20u, 20v, 20w), wobei einer an den inneren Kreisumfängen von jedem kreisförmigen Statorjoch (106, 107, 108) ausgebildet ist, n Spulen (22, 23, 24), die in den kreisförmigen Spulenschlitzen (20u, 20v, 20w) eingesetzt sind, ein Rotorjoch (109), das an der rotierenden Welle (200) entsprechend den Statorjochen (106, 107, 108) angebracht ist, und eine Vielzahl von Rotorzähnen (109a), die an dem Kreisumfang des Rotorjochs (109) vorgesehen sind, **gekennzeichnet dadurch, dass** der Schrittmotor umfasst ein Paar von unteren Magnetplatten (103, 104), die innerhalb des Gehäuses (300) auf eine Art und Weise angebracht sind, dass der Statorjochkörper (100) zwischen untere flache Magneten (101, 102) zwischengestellt ist, die zwischen die unteren Magnetplatten (103, 104) zwischengestellt sind, wodurch ein magnetischer Fluss von den unteren flachen Magneten (101, 102) zu den unteren Magnetplatten (103, 104) strömt.

3. Schrittmotor hybriden Typs mit einem Außenrotoraufbau nach Anspruch 1, wobei N Stücke von nämlich einer vielfachen Zahl von Stücken von Statorjochkörpern (9, 10, 11), wobei die flachen Magneten (8) dazwischen gestellt sind, kaskadiert sind.

4. Schrittmotor hybriden Typs mit einem Innenrotoraufbau nach Anspruch 2, wobei N Stücke von nämlich einer vielfachen Zahl von Stücken von Statorjochkörpern (106, 107, 108), wobei die flachen Magneten (8) dazwischen gestellt sind, kaskadiert sind.

5. Schrittmotor hybriden Typs mit einem Außenrotoraufbau, umfassend ein Paar von Lagern (2, 3), die auseinander beabstandet und an einer fixierten Welle (1) angebracht sind, ein Rotorgehäuse (4), das durch die Lager (2, 3) drehbar gestützt wird, ein ringförmiges Rotorjoch (6), das an dem Rotorgehäuse (4) angebracht ist, mit einer Vielzahl von Rotorzähnen (7), einen Statorjochkörper (100), bestehend aus n Stücken von Statorjochen (9, 10, 11), angeordnet Seite an Seite in der Richtung der fixierten Welle (1), wobei jedes Joch an einem entsprechenden Zylindermagnet (8) angebracht ist, befestigt an der fixierten Welle (1), eine Vielzahl von Statorzähnen (9a, 10a, 11a), die an den Kreisumfängen der Statorjoche (9, 10, 11) ausgebildet sind, n axial zentrierte kreisförmige Spulenschlitze (20u, 20v, 20w), die an den Kreisumfängen der Statorjoche (9, 10, 11) ausgebildet sind, n Spulen (22, 23, 24), die in den kreisförmigen Spulenschlitzen (20u, 20v, 20w) eingesetzt sind, **gekennzeichnet dadurch, dass** der Schrittmotor ein Paar von unteren magnetischen Flanschen (103, 104) umfasst, die an jeweiligen unteren Zylindermagneten (101, 102) an der fixierten Welle (1) angebracht sind, wobei der Statorjochkörper (100) zwischen das Paar von unteren magnetischen Flanschen (103, 104) zwischengestellt ist, wodurch die Statorjoche (9, 10, 11) in der Magnetpolarität wechseln und ein magnetischer Fluss von den unteren Zylindermagneten (101, 102) zu den unteren magnetischen Flanschen (103, 104) strömt.

6. Schrittmotor hybriden Typs mit einem Innenrotoraufbau, umfassend ein Paar von Lagern (2, 3), die an beiden Enden eines Gehäuses (300) angebracht sind, eine rotierende Welle (200), die durch die Lager (2, 3) drehbar gestützt wird, einen Statorjochkörper (100), bestehend aus n Stücken von ringförmigen Statorjochen (106, 107, 108), angeordnet Seite an Seite in der Richtung der rotierenden Welle (200) an dem inneren Kreisumfang des Gehäuses (300) , wobei jedes Statorjoch (106, 107, 108) auf einem Zylindermagnet (8) ruht, befestigt an dem inneren Kreisumfang des Gehäuses (300), eine Vielzahl von Statorzähnen, die an den inneren Kreisumfängen der ringförmigen Statorjoche (106, 107, 108) ausgebildet sind,
n axial zentrierte kreisförmige Spulenschlitze (20u, 20v, 20w), die an den inneren Kreisumfängen der ringförmigen Statorjoche (106, 107, 108) ausgebildet sind,
n Spulen (22, 23, 24), die in den kreisförmigen Spulenschlitzen (20u, 20v, 20w) eingesetzt sind, ein Rotorjoch (108), das an der rotierenden Welle (200) entsprechend den Statorjochen (106, 107, 108) angebracht ist, und eine Vielzahl von Rotorzähnen, die an dem Kreisumfang des Rotorjochs (109) vorgesehen sind, **gekennzeichnet dadurch, dass** der Schrittmotor ein Paar von unteren magnetischen Flanschen (103, 104) umfasst, angebracht an jeweiligen unteren Zylindermagneten (101, 102) an dem inneren Kreisumfang des Gehäuses (300), wobei der Statorjochkörper (100) zwischen das Paar von unteren magnetischen Flanschen (103, 104) zwischengestellt ist, wodurch ein magnetischer Fluss von den unteren Zylindermagneten (103, 104) zu den unteren magnetischen Flanschen (101, 102) strömt.

7. Schrittmotor hybriden Typs nach einem beliebigen vorangehenden Anspruch, wobei drei Statorjoche (9, 10, 11, 106, 107, 108) für eine dreiphasige Ansteuerung eingesetzt werden.

8. Schrittmotor hybriden Typs nach beliebigen von Ansprüchen 1 bis 6, wobei zwei Statorjoche (9, 10, 11, 106, 107, 108) für eine zweiphasige Ansteuerung eingesetzt werden.

9. Schrittmotor hybriden Typs mit einem Außenrotoraufbau nach Ansprüchen 5 oder 7, wobei eine Vielzahl von Statorjochkörpern, nämlich N Stücke von Statorjochkörpern mit den eingesetzten Zylindermagneten (8) kaskadiert sind.

10. Schrittmotor hybriden Typs mit einem Innenrotoraufbau nach Ansprüchen 6 oder 8, wobei eine Vielzahl von Statorjochkörpern, nämlich N Stücke von Statorjochkörpern mit den eingesetzten Zylindermagneten (8) kaskadiert sind.

## Revendications

1. Moteur pas-à-pas de type hybride comportant une structure de rotor externe comprenant une paire de paliers (2, 3) espacés et montés sur un arbre fixe (1), un boîtier de rotor (4) supporté à rotation par les paliers (2, 3), une culasse de rotor de forme annulaire (6) montée sur le boîtier de rotor (4), ayant plusieurs dents de rotor (7), un corps de culasse de stator (100) constitué de n pièces de culasses de stator (9, 10, 11) agencées côte à côte avec des aimants plats (8) interposés entre celles-ci sur l'arbre fixe (1) le long de la direction de l'arbre fixe (1), plusieurs dents de stator (9a, 10a, 11a) formées sur les circonférences des culasses de stator (9, 10, 11), n fentes de bobine circulaires axialement centrées (20u, 20v, 20w), une fente étant formée sur les circonférences de chaque culasse de stator (9, 10, 11), n bobines (22, 23, 24) logées aux fentes de bobine circulaires (20u, 20v, 20w), **caractérisé en ce que** le moteur pas-à-pas comprend une paire de plaques magnétiques auxiliaires (103, 104) montées sur l'arbre fixe (1) de telle manière que le corps de culasse de stator (100) est interposé entre des aimants plats auxiliaires (101, 102) qui sont interposés entre les plaques magnétiques auxiliaires (103, 104), par quoi les culasses de stator (9, 10, 11) alternent en polarité magnétique, et le flux magnétique passe des aimants plats auxiliaires (101, 102) aux plaques magnétiques auxiliaires (103, 204).

2. Moteur pas-à-pas de type hybride comportant une structure de rotor interne comprenant deux paliers (2, 3) installés aux deux extrémités d'un boîtier (300), un arbre de rotation (200) supporté à rotation par les paliers (2, 3), un corps de culasse de stator (100) constitué de n pièces de culasse de stator de forme annulaire (106, 107, 108) agencées côte à côte avec des aimants plats de forme annulaire (8) interposés entre la circonférence interne du boîtier (300) le long de la direction de l'arbre de rotation (300), plusieurs dents de stator formées sur les circonférences internes des culasses de stator de forme annulaire (106, 107, 108), n fentes de bobine circulaires centrées axialement (20u, 20v, 20w), l'une formée sur les circonférences internes de chaque culasse de stator de forme annulaire (106, 107, 108), n bobines (22, 23, 24) logées aux fentes de bobine circulaires (20u, 20v, 20w), une culasse de rotor (109) montée sur l'arbre de rotation (200) correspondant aux culasses de stator (106, 107, 108) et plusieurs dents de rotor (109a), réalisées sur la circonférence de la culasse de rotor (109), **caractérisé en ce que** le moteur pas-à-pas comprend une paire de plaques magnétiques auxiliaires (103, 104) installées à l'intérieur du boîtier (300) de telle manière que le corps de culasse de stator (100) est interposé entre des aimants plats auxiliaires (101, 102) qui sont interposés entre les plaques magnétiques auxiliaires (103, 104), par quoi le flux magnétique passe des aimants plats auxiliaires (101, 102) aux plaques magnétiques auxiliaires (103, 104).

3. Moteur pas-à-pas de type hybride comportant une structure de rotor externe selon la revendication 1, où N pièces de, c'est-à-dire des pièces en plusieurs nombres de, corps de culasse de stator (9, 10, 11) avec des aimants plats (8) entreposés entre celles-ci sont montées en cascade.

4. Moteur pas-à-pas de type hybride comportant une structure de rotor interne selon la revendication 2, où N pièces de, à savoir des pièces en plusieurs nombres, des corps de culasse de stator (106, 107, 108) avec des aimants plats (8) entreposés entre celles-ci sont montées en cascade.

5. Moteur pas-à-pas de type hybride comportant une structure de rotor externe comprenant deux paliers (2, 3) espacés et montés sur un arbre fixe (1), un boîtier de rotor (4) supporté à rotation par les paliers (2, 3), une culasse de rotor de forme annulaire (6) montée sur le boîtier de rotor (4), comportant plusieurs dents de rotor (7), un corps de culasse de stator (100) constitué de n pièces de culasse de stator (9, 10, 11) agencées côte à côte dans la direction de l'arbre fixe (1), chaque culasse étant montée sur un aimant cylindrique correspondant (8) fixé à l'arbre fixe (1), plusieurs dents de stator (9a, 10a 11a) formées sur les circonférences des culasses de stator (9, 10, 11), n fentes de bobine circulaires axialement centrées (20u, 20v, 20w) formées sur les circonférences des culasses de stator (9, 10, 11), n bobines (22, 23, 24) logées aux fentes de bobine circulaires (20u, 20v, 20w), **caractérisé en ce que** le moteur pas-à-pas comprend une paire de brides magnétiques auxiliaires (103, 104) montées sur des aimants cylindriques auxiliaires respectifs (101, 102) sur l'arbre fixe (1), avec le corps de culasse de stator (100) interposé entre la paire de brides magnétiques auxiliaires (103, 104), par quoi les culasses de stator (9, 10, 11) alternent en polarité magnétique, et le flux magnétique passe des aimants cylindriques auxiliaires (101, 102) aux brides magnétiques auxiliaires (103, 104).

6. Moteur pas-à-pas de type hybride comportant une structure de rotor interne comprenant une paire de paliers (2, 3) installés aux deux extrémités d'un boîtier (300), un arbre de rotation (200) supporté à rotation par les paliers (2, 3), un corps de culasse de stator (100) constitué de n pièces de culasse de stator de forme annulaire (106, 107, 108) agencées côte à côte dans la direction de l'arbre de rotation (200) sur la circonférence interne du boîtier (300), chaque culasse de stator (106, 107, 108) reposant sur un aimant cylindrique (8) fixé à la circonférence interne du boîtier (300), plusieurs dents de stator formées sur les circonférences internes des culasses de stator de forme annulaire (106, 107, 108),
n fentes de bobine circulaires axialement centrées (20u, 20v, 20w) formées sur les circonférences internes des culasses de stator de forme annulaire (106, 107, 108),
n bobines (22, 23, 24) logées aux fentes de bobine circulaires (20u, 20v, 20w), une culasse de rotor (108) montée sur l'arbre de rotation (200) d'une manière correspondante aux culasses de stator (106, 107, 108), et plusieurs dents de rotor réalisées sur la circonférence de la culasse de rotor (109), **caractérisé en ce que** le moteur pas-à-pas comprend une paire de brides magnétiques auxiliaires (103, 104) montées sur des aimants cylindriques auxiliaires respectifs (101, 102) sur la circonférence interne du boîtier (300), avec le corps de culasse de stator (100) interposé entre la paire de brides magnétiques auxiliaires (103, 104), par quoi le flux magnétique passe des aimants cylindriques auxiliaires (103, 104) aux brides magnétiques auxiliaires (101, 102).

7. Moteur pas-à-pas de type hybride selon l'une des revendications précédentes, où trois culasses de stator (9, 10, 11, 106, 107, 108) sont utilisées pour un entraînement en trois phases.

8. Moteur pas-à-pas de type hybride selon l'une des revendications 1 à 6, où deux culasses de stator (9, 10, 11, 106, 107, 108) sont utilisées pour un entraînement en deux phases.

9. Moteur pas-à-pas de type hybride comportant une structure de rotor externe selon les revendications 5 ou 7, où plusieurs corps de culasse de stator, à savoir N pièces de corps de culasse de stator avec les aimants cylindriques (8) employés sont montées en cascade.

10. Moteur pas-à-pas de type hybride comportant une structure de rotor interne selon les revendications 6 ou 8, où plusieurs corps de culasse de stator, à savoir N pièces de corps de culasse de stator avec les aimants cylindriques (8) utilisés sont montées en cascade.
